# EUROPÄISCHE PATENTSCHRIFT

(11) **EP 1 290 897 B1**
(45) Veröffentlichungstag und Bekanntmachung des Hinweises auf die Patenterteilung: **02.06.2004**
(21) Anmeldenummer: 02747343.8
(22) Anmeldetag: 04.06.2002
(51) Int. Cl.: H04N 9/31

(54) **Farbbildprojektor**
Color image projector
Projecteur d'images en couleurs

(30) Priorität: 07.06.2001 DE 10127620
(43) Veröffentlichungstag der Anmeldung: 12.03.2003
(73) Patentinhaber: CARL ZEISS JENA GmbH, 07745 Jena (DE)
(72) Erfinder: PIEHLER, Eberhard, 07778 Lehesten (DE); MÜHLHOFF, Dirk, 07751 Kunitz (DE); RUDOLPH, Günter, 07743 Jena (DE); PRETORIUS, Marco, 73447 Oberkochen (DE)
(74) Vertreter: Grimm, Christian Jan Rainer
(86) Internationale Anmeldenummer: PCT/EP2002/006142
(87) Internationale Veröffentlichungsnummer: WO 2002/100114

(56) Entgegenhaltungen:
- EP-A- 1 205 791
- US-B1- 6 229 581

## Beschreibung

Die Erfindung bezieht sich auf eine Anordnung zum Projizieren eines mehrfarbigen Bildes auf eine Projektionsfläche, mit einer Lichtquelle die mehrfarbiges Licht abgibt, einer der Lichtquelle nachgeschalteten Farbeinheit, einem ersten und einem zweiten der Farbeinheit nachgeschalteten Lichtmodulator und einer Projektionsoptik, wobei die Farbeinheit mit dem Licht der Lichtquelle beaufschlagbar ist und davon Licht einer ersten Farbe auskoppelt und auf den ersten Lichtmodulator lenkt und Licht einer zweiten Farbe auskoppelt und auf den zweiten Lichtmodulator lenkt, wobei die Lichtmodulatoren das auf sie fallende Licht modulieren, um jeweils ein Farbteilbild des mehrfarbigen Bildes zu erzeugen, und wobei das modulierte Licht mittels der Farbeinheit zu einem gemeinsamen Strahlenbündel überlagert wird, mit dem die Projektionsoptik beaufschlagt wird.

Bei einer solchen Anordnung, die beispielsweise in EP 0 734 183 A2 beschrieben ist, ist aufgrund der Farbeinheit, die zwischen der Projektionsoptik und den Lichtmodulatoren, mittels denen die Farbteilbilder eingestellt werden, angeordnet ist, die notwendige Schnittweite der Projektionsoptik sehr groß. Dies führt zu einer sehr aufwendig zu gestaltenden Projektionsoptik mit vielen Linsen, wodurch die Projektionsoptik teuer und auch schwer wird. Des weiteren umfaßt die Farbeinheit in der Regel Glaselemente mit dichroitischen Schichten, so daß ein langer Glasweg zwischen den Lichtmodulatoren und der Projektionsoptik vorhanden ist, der von dem verschiedenfarbigen Licht für die Farbteilbilder durchlaufen werden muß. Dies führt aufgrund der Dispersionseigenschaft der Glaselemente zu einem Farbquerfehler, so daß in der Projektionsfläche die unterschiedlichen Farbanteile eines Bildpunktes nicht mehr übereinander sondern nebeneinander liegen. Dieser Farbquerfehler muß mittels der Projektionsoptik kompensiert werden, was wiederum dazu führt, daß die Projektionsoptik aufwendig aufgebaut sein muß.

EP-A-1 205 751 zeigt eine Projektionsoptik, die mit planen und gekrümmten Spiegeln aufgebaut ist.

Zur notwendigen Achromatisierung, um den Farbquerfehler zu vermeiden, werden in der Projectionsoptik insbesondere Linsen aus Flintglas und Linsen aus Kronglas kombiniert, wobei als Kronglas häufig Flußspat eingesetzt wird, das sehr schwierig zu bearbeiten ist. Somit wird die Herstellung der Projektionsoptik verkompliziert. Ferner weist Flußspat noch nachteilig hygroskopische Eigenschaften auf, wodurch sich die Abbildungseigenschaften der Projektionsoptik im Laufe der Zeit verschlechtern können.

Ausgehend hiervon ist es Aufgabe der vorliegenden Erfindung, eine Anordnung der eingangs genannten Art zum Projizieren eines mehrfarbigen Bildes auf eine Projektionsfläche so zu verbessern, daß ihr Aufbau vereinfacht ist.

Die Aufgabe wird bei einer Anordnung der eingangs genannten Art zum Projizieren eines mehrfarbigen Bildes auf eine Projektionsfläche dadurch gelöst, daß zwischen, der Farbeinheit und der Projektionsoptik eine mit dem gemeinsamen Strahlenbündel beaufschlagbare Optikeinrichtung mit einem gekrümmten Spiegel angeordnet ist, wobei die Optikeinrichtung in einer der Projektionsoptik vorgeschalteten Zwischenbildebene ein mehrfarbiges Zwischenbild erzeugt, das von der Projektionsoptik als das mehrfarbige Bild auf die Projektionsfläche projiziert wird.

Durch das Vorsehen der Optikeinrichtung, die das Zwischenbild (bevorzugt ein reelles Zwischenbild) in der vor der Projektionsoptik liegenden Zwischenbildebene erzeugt (die Zwischenbildebene kann bevorzugt auch unmittelbar vor der Projektionsoptik liegen), ist die erforderliche Schnittweite der Projektionsoptik bei der erfindungsgemäßen Anordnung sehr viel geringer als bei der Anordnung der eingangs genannten Art. Dadurch sind natürlich die optischen Anforderungen für die Projektionsoptik wesentlich vermindert, so daß auch der Aufbau der Projektionsoptik deutlich vereinfacht ist. Insbesondere ist die Anzahl der notwendigen Linsen für die Projektionsoptik geringer, wodurch auch ihr Gewicht reduziert werden kann.

Des weiteren kann die Projektionsoptik auch völlig unabhängig von der restlichen Anordnung ausgelegt und entworfen werden, da sie das in der Zwischenbildebene erzeugte Zwischenbild und nicht die bildgebenden Bereiche der Lichtmodulatoren auf die Projektionsfläche abbilden muß.

Ferner kann bei der erfindungsgemäßen Anordnung die Projektionsoptik auch leicht durch eine andere Projektionsoptik ersetzt werden, so daß die erfindungsgemäße Anordnung in einfachster Art und Weise an unterschiedliche Rahmenbedingungen, wie z.B. eine Weitwinkelprojektion oder eine Projektion, bei der die optische Achse der Projektionsoptik einen Winkel ungleich 90° mit der Projektionsfläche einschließt, angepaßt werden kann.

Der gekrümmte Spiegel trägt neben der durch ihn bewirkten Faltung des Strahlengangs auch noch zur Abbildung bei, so daß deshalb die Anzahl der optischen Elemente der Optikeinrichtung weiter verringert werden kann.

Die Lichtmodulatoren, die bevorzugt reflektive Lichtmodulatoren sind (mit diesen läßt sich vorteilhaft eine sehr kompakte Anordnung realisieren), weisen einen bildgebenden Bereich (beispielsweise rechteckig) mit einer Mehrzahl von unabhängig voneinander ansteuerbaren Bildpixeln auf, von denen das einfallende Licht moduliert abgegeben wird (z.B. hinsichtlich seines Ausfallwinkels oder seiner Polarisationsrichtung), wobei abgegebenes Licht in einem ersten Modulationszustand für hell geschaltete Bildpunkte und abgegebenes Licht in einem zweiten Modulationszustand für dunkel geschaltete Bildpunkte verwendet wird, so daß in diesem Sinne auf den Lichtmodulatoren bzw. deren bildgebenden Bereichen Bilder (bzw. Farbteilbilder) erzeugt werden. Natürlich können die Lichtmodulatoren auch so ausgebildet sein, daß nur von den Bildpixeln der hell zu schaltenden Bildpunkte Licht abgegeben wird, während von den Bildpixeln der dunkel zu schaltenden Bildpunkte kein Licht ausgeht, sondern einfallendes Licht dort absorbiert wird.

In einer bevorzugten Weiterbildung der erfindungsgemäßen Anordnung ist die Optikeinrichtung eine 1:1-Abbildungoptik. Damit wird vorteilhaft erreicht, daß das Zwischenbild die gleiche Größe aufweist wie die Farbteilbilder, wodurch der Linsendurchmesser der Linsen der Projektionsoptik klein gehalten werden kann. Auch sind in diesem Fall die Abbildungseigenschaften der Optikeinrichtung am besten.

Insbesondere kann die Optikeinrichtung so ausgelegt sein, daß die Farbteilbilder in der Zwischenbildebene verkleinert abgebildet werden. Dadurch kann vorteilhaft die Öffnung der Projektionsoptik und somit auch ihre optischen Elemente noch kleiner gestaltet werden, wodurch die Projektionsoptik kostengünstiger und leichter zu fertigen ist. Darüberhinaus wird vorteilhaft noch eine Gewichtseinsparung erzielt, so daß die erfindungsgemäße Anordnung insgesamt leichter wird.

Bevorzugt ist die Optikeinrichtung der erfindungsgemäßen Anordnung bezüglich des Spiegels symmetrisch ausgebildet wird. Dies führt einerseits zu einer Verringerung der Anzahl der benötigten Optikelemente in der Optikeinrichtung, da diese zweimal durchlaufen werden. Andererseits sind, wenn die Optikeinrichtung eine symmetrische 1:1-Abbildungsoptik ist, die durch die Optikeinrichtung erzeugten Abbildungsfehler sehr gering und im optimalen Fall praktisch null und somit nicht vorhanden.

Eine vorteilhafte Ausgestaltung der erfindungsgemäßen Anordnung besteht darin, daß der Spiegel der Optikeinrichtung eine sphärische Krümmung aufweist. In diesem Fall ist die Fertigung des Spiegels leicht möglich, wodurch eine kostengünstige Optikeinrichtung und somit auch eine kostengünstige Anordnung zum Projizieren eines mehrfarbigen Bildes bereitgestellt werden kann.

Des weiteren kann die Optikeinrichtung der erfindungsgemäßen Anordnung eine katadioptrische Optik (eine Optik, die zumindest einen abbildenden Spiegel und zumindest eine abbildende Linse umfaßt) sein. Mit einer solchen Optik lassen sich besonders gute Abbildungseigenschaften bei geringen Abmessungen mit wenig Optikelementen realisieren, so daß vorteilhaft auch noch eine Gewichtsreduzierung erreicht wird.

In einer bevorzugten Weiterbildung der erfindungsgemäßen Anordnung ist der Spiegel der Optikeinrichtung als reflektierende Beschichtung auf einer gekrümmten und der Farbeinheit abgewandten Grenzflächen eines transparenten Optikelements der Optikeinrichtung ausgebildet. Dies führt zu dem Vorteil, daß die Anzahl der zu justierenden Elemente der Optikeinrichtung verringert ist, so daß eine schnellere Herstellung der Optikeinrichtung möglich wird. Des weiteren ist die reflektierende Beschichtung auf der Grenzfläche gebildet und weist somit keine freiliegende Verspiegelungsschicht auf, die leicht verschmutzen könnte, so daß die reflektierenden Eigenschaften und Abbildungseigenschaften dauerhaft sichergestellt werden können.

Eine besonders bevorzugte Weiterbildung der erfindungsgemäßen Anordnung besteht darin, daß noch ein dritter der Farbeinheit nachgeschalteter Lichtmodulator vorgesehen ist, wobei die Farbeinheit aus dem Licht der Lichtquelle eine dritte Farbe auskoppelt und auf den dritten Lichtmodulator lenkt, so daß auf diesem ein drittes Farbteilbild einstellbar ist. Da drei Lichtmodulatoren für drei unterschiedliche Farbteilbilder vorgesehen sind, kann ein brillantes Farbbild, das aus den überlagerten Farbteilbildern zusammengesetzt ist, leicht erzeugt werden.

Bevorzugt werden durch die Lichtmodulatoren Farbteilbilder in denen Primärfarben rot, grün und blau eingestellt, aus denen das gewünschte mehrfarbige Bild mit hoher Farbbrillanz erzeugt werden kann.

Bei einer erfindungsgemäßen Ausgestaltung der erfindungsgemäßen Anordnung sind die Lichtmodulatoren so ausgelegt, daß sie den Polarisationszustand, insbesondere die Polarisationsrichtung, des auf sie einfallenden, bevorzugt linear polarisierten, Lichtes modulieren können, wobei die Lichtmodulatoren bevorzugt durch reflektive oder transmissive LCD-Module verwirklicht sind.

Damit können durch die Lichtmodulatoren polarisationsmodulierte Farbteilbilder erzeugt werden. In diesem Fall ist noch ein der Zwischenbildebene vorgeschalteter Analysator vorgesehen, der mit dem modulierten Licht der Lichtmodulatoren beaufschlagbar ist und bewirkt, daß nur Licht mit einem vorbestimmten Polarisationszustand in die Zwischenbildebene gelangt. Dadurch wird vorteilhaft erreicht, daß nur das Licht der mittels der Lichtmodulatoren hell geschalteten Bildpunkte in die Zwischenbildebene gelangt und durch die Projektionsoptik auf die Projektionsfläche projiziert wird.

Bevorzugt ist der Analysator zwischen der Zwischenbildebene und der Optikeinrichtung angeordnet, wodurch der Beleuchtungsstrahlengang des von der Lichtquelle kommenden Lichts, mit dem die Lichtmodulatoren beaufschlagt werden, und der Projektionsstrahlengang des von den reflektiven Lichtmodulatoren reflektierten Lichts, das in die Zwischenbildebene abgebildet wird, in der Optikeinrichtung überlagert werden können. Daher kann in vorteilhafter Weise die erfindungsgemäße Anordnung sehr kompakt aufgebaut werden.

Insbesondere kann als Lichtmodulator auch eine Kippspiegelmatrix eingesetzt werden, die eine Vielzahl von in Zeilen und Spalten angeordnete Kippspiegel aufweist, die voneinander unabhängig zumindest zwischen einer ersten und einer zweiten Kippstellung hin und her gekippt werden können. In diesem Fall ist die erfindungsgemäße Anordnung so ausgebildet, daß das von den in der ersten Kippstellung befindlichen Spiegeln reflektierte Licht in die Zwischenbildebene gelangt, während das von den in der zweiten Kippstellung stehenden Spiegeln reflektierte Licht nicht in die Zwischenbildebene gelangt. Durch die Kippspiegel läßt sich vorteilhaft eine erfindungsgemäße Anordnung verwirklichen, bei der das Licht, mit dem die Kippspiegelmatrix beleuchtet wird, nicht speziell polarisiert sein muß, so daß die durch eine Polarisation des Lichts verursachten Verluste vermieden werden können.

Eine vorteilhafte Weiterbildung der erfindungsgemäßen Anordnung besteht darin, daß die Optikeinrichtung aus einer Plankonvexlinse und einer verspiegelten Meniskuslinse besteht, wobei die der Plankonvexlinse abgewandte Grenzfläche der Meniskuslinse verspiegelt ist. Die Linsendurchmesser sind so groß gewählt, daß jede Linse bei einer Abbildung zweimal durchlaufen wird. Diese Optikeinrichtung weist in diesem Fall somit nur zwei Optikelemente auf, wodurch die Herstellungskosten und der Aufwand zur Justierung sehr gering sind. Dadurch wird insgesamt eine kostengünstig herzustellende erfindungsgemäße Anordnung bereitgestellt.

Es ist natürlich auch möglich, die eine Plankonvexlinse durch zwei Plankonvexlinsen mit kleinerem Durchmesser zu ersetzen, die dann bei einer Abbildung jeweils nur einmal durchlaufen werden. In diesem Fall umfaßt die Optikeinrichtung zwar drei Elemente, aber die Herstellung der zwei Plankonvexlinsen ist aufgrund ihres deutlich geringeren Durchmessers einfacher möglich als die Herstellung der einen Plankonvexlinse mit großem Durchmesser.

In einer anderen vorteilhaften Ausgestaltung der erfindungsgemäßen Anordnung weist die Optikeinrichtung sowohl einen Konkavspiegel als auch einen Konvexspiegel auf. Dadurch kann eine nur durch abbildende Spiegel verwirklichte Optikeinrichtung bereitgestellt werden, so daß keine aus teuren Materialien in aufwendiger Art und Weise herzustellende Linsen benötigt werden. Auch somit läßt sich die erfindungsgemäße Anordnung kostengünstiger verwirklichen.

Ferner kann bei der erfindungsgemäßen Anordnung die Optikeinrichtung so ausgebildet sein, daß sie sowohl ein mit Licht der Lichtquelle gebildetes leuchtendes Feld auf die Lichtmodulatoren abbildet als auch die Farbteilbilder in die Zwischenbildebene abbildet. In diesem Fall übernimmt die Optikeinrichtung vollständig die Funktion einer ansonsten separat vorzusehenden Beleuchtungsoptik, die zwischen dem leuchtenden Feld und den Lichtmodulatoren angeordnet ist und zum Ausleuchten der Lichtmodulatoren dient, so daß eine solche Beleuchtungsoptik bei der erfindungsgemäßen Anordnung entfallen kann. Dadurch läßt sich die erfindungsgemäße Anordnung kompakt realisieren.

Die erfindungsgemäße Anordnung kann auch noch dadurch weitergebildet werden, daß sie eine Steuereinheit aufweist, die die Lichtmodulatoren auf der Basis vorgegebener Bilddaten ansteuert, um die gewünschten Farbteilbilder mit den Lichtmodulatoren zu erzeugen.

Die Erfindung wird nachfolgend beispielshalber anhand der Zeichnungen noch näher erläutert. Es zeigen:
- Fig. 1: eine schematische Schnittdarstellung der erfindungsgemäßen Anordnung gemäß einer ersten Ausführungsform;
- Fig. 2: eine schematische Schnittdarstellung einer zweiten Ausführungsform der erfindungsgemäßen Anordnung, bei der die Optikeinrichtung einen konkaven und einen konvexen Spiegel aufweist;
- Fig. 3: eine schematische Ansicht einer weiteren Ausführungsform der erfindungsgemäßen Anordnung;
- Fig. 4: eine schematische Seitenansicht einer anderen Ausführungsform der erfindungsgemäßen Anordnung;
- Fig. 5: eine perspektivische Ansicht einer weiteren Ausführungsform der erfindungsgemäßen Anordnung, und
- Fig. 6: eine Schnittansicht einer Ausführung der Projektionsoptik der erfindungsgemäßen Anordnung.

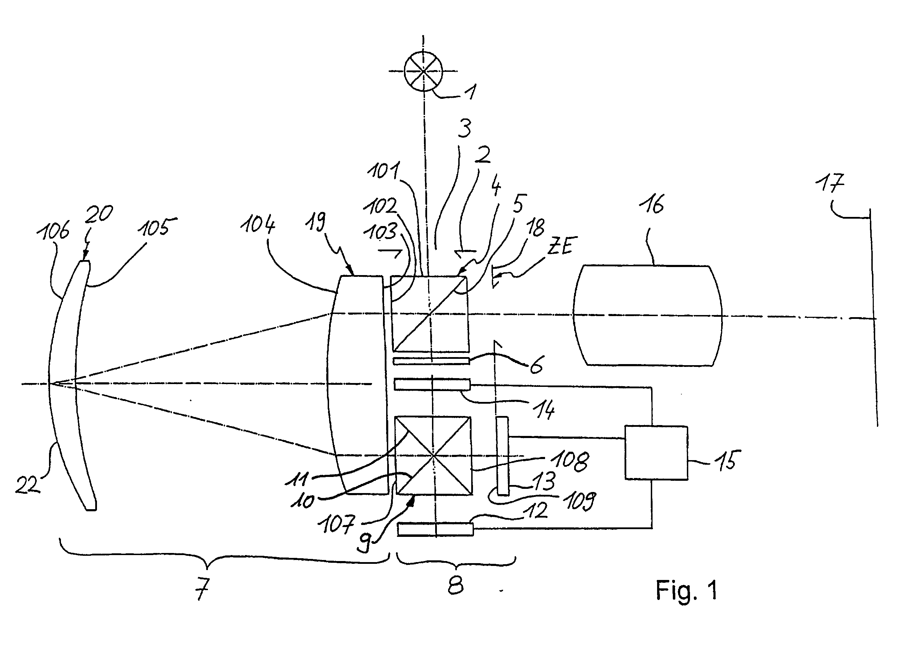

Wie aus Fig. 1 ersichtlich ist, umfaßt die erfindungsgemäße Anordnung zum Projizieren eines mehrfarbigen Bildes auf eine Projektionsfläche in einer ersten Ausführungsform eine Lichtquelle 1 (z.B. Halogen- oder Bogenlampe), mit dessen weißem Licht eine Blende 2 beaufschlagt wird, so daß in der Öffnung der Blende 2 ein leuchtendes Feld 3 erzeugt wird, dessen Form durch die Form der Blendenöffnung vorgegeben ist. In dem hier gezeigten Beispiel weist das leuchtende Feld 3 eine rechteckige Form auf. Das Licht des leuchtenden Feldes 3 trifft auf einen Polarisationsteilerwürfel 4, der eine Palarisationsteilerschicht 5 enthält.

Die Polarisationsteilerschicht 5 des Polarisationsteilervvürfels 4 reflektiert das von dem leuchtenden Feld 3 kommende Licht, das in einer ersten Richtung linear polarisiert ist (z.B. senkrecht zur Zeichenebene polarisiert, s-Polarisation), so daß linear polarisiertes Licht, dessen Polarisationsrichtung senkrecht zur Zeichenebene ist, in Fig. 1 gesehen, nach links abgelenkt wird. Hingegen geht das in einer zweiten Richtung polarisierte Licht (parallel zur Zeichenebene, p-Polarisation) durch die Polarisationsteiterschicht 5 hindurch und trifft auf eine dahinter angeordnete Strahlfalle 6.

Das an der Polarisationsteilerschicht 5 reflektierte Licht (s-Polarisation) wird über eine dem Polarisationsteiler 4 nachgeschaltete Optikeinrichtung 7 auf eine Farbbilderzeugungseinheit 8 abgebildet.

Die Farbbilderzeugungseinheit 8 umfaßt einen Farbteilerwürfel 9 mit einer ersten und einer zweiten Farbteilerschicht 10, 11, die sich unter einem Winkel von 90° kreuzen und das von der Optikeinrichtung 7 kommende weiße Licht in seinen roten, grünen und blauen Farbanteil aufteilen, wobei die Farbanteile in voneinander verschiedene Farbkanäle gelenkt werden. Ferner enthält die Farbbilderzeugungseinheit 8 drei reflektive Lichtmodulatoren (LCD-Module) 12, 13 und 14, von denen jeweils einer in einem der Farbkanäle angeordnet ist und mit Licht der entsprechenden Farbe beaufschlagbar ist. Die Lichtmodulatoren 12, 13 und 14 werden mittels einer Ansteuereinheit 15 auf der Basis vorgegebener Bilddaten so gesteuert, daß das von den Lichtmodulatoren 12 bis 14 reflektierte Licht entsprechend den zu erzeugenden Farbteilbildern des zu projizierenden Bildes moduliert ist. Somit geht von den Lichtmodulatoren 12 bis 14 polarisationsmoduliertes Licht aus, und es wird in diesem Sinne auf den Lichtmodulatoren 12 bis 14 jeweils ein Farbteilbild erzeugt.

Das von den Lichtmodulatoren 12, 13 und 14 modulierte Licht und somit die Farbteilbilder werden von den Lichtmodulatoren 12, 13 und 14 zurück zum Farbteilerwürfel 9 reflektiert und von diesem überlagert und dann mittels der Optikeinrichtung 7 in eine dem Polarisationsteilerwürfel 4 nachgeschaltete Zwischenbildebene ZE abgebildet (wie nachfolgend noch im Detail beschrieben wird) und dann mittels einer der Zwischenbildebene ZE nachgeordneten Projektionsoptik 16 auf eine Projektionsfläche 17 projiziert. In der Zwischenbildebene ZE ist eine Blende 18 angeordnet, in deren Blendenöffnung das Zwischenbild liegt und die eine seitliche Begrenzung für das Zwischenbild darstellt.

Die Optikeinrichtung 7 ist so ausgebildet, daß das leuchtende Feld 3 konjugiert ist mit den Lichtmodulatoren 12, 13 und 14 bzw. deren bildgebenden Bereichen. Ferner sind die bildgebenden Bereiche der Lichtmodulatoren 12, 13 und 14 auch mit der Zwischenbildebene ZE konjugiert, wobei die Optikeinrichtung 7 hier ein symmetrisches 1:1-Abbildungssystem ist. Daher ist die Blende 2 so gewählt, daß ihre Öffnung und somit das leuchtende Feld 3 die gleiche Größe und Form wie jeder der gleich ausgebildeten bildgebenden Bereiche der Lichtmodulatoren 12, 13 und 14 aufweist.

Bei der in Fig. 1 gezeigten Ausführungsform umfaßt die Optikeinrichtung 7 eine Plankonvexlinse 19, deren plane Seite 103 dem Polarisationsteilerwürfel 4 und dem Farbteilerwürfel 9 zugewandt ist, und eine Meniskuslinse 20, die auf ihre der Plankonvexlinse 19 abgewandten Seite 106 eine Verspiegelungsschicht 22 aufweist, wodurch der Strahlengang in der Optikeinrichtung 7 gefaltet ist.

Der Aufbau der Optikeinrichtung kann der folgenden Tabelle 1 in Verbindung mit Fig. 1 entnommen werden:

**Tabelle 1**

| Flächennummer | Krümmungsradius (mm) | zwischen den Flächen | Abstand (mm) | Brechungsindex | Abbesche Zahl |
|---|---|---|---|---|---|
| 2 | | 2-101 | 2,00 | | |
| 101 | | 102-103 | 0,01 | | |
| 102 | | 103-104 | 27,72 | 1,5168 | 64,17 |
| 103 | | 104-105 | 271,80 | | |
| 104 | 130,088 | 105-106 | 10,40 | 1,6014 | 38,32 |
| 105 | 374,16 | 103-107 | 0,01 | | |
| 106 | 375,38 | 107-108 | 65,00 | | |
| 107 | | 108-109 | 2,00 | | |
| 108 | | | | | |
| 109 | | | | | |

Der Brechungsindex und die Abbesche Zahl ist hier für die Wellenlänge 587,6 mm angegeben, und der Polarisationsteilerwürfel 4 weist eine Kantenlänge von 65,00 mm auf, so daß die Zwischenbildebene ZE von der der Projektionsoptik 16 zugewandten Seite 2,00 mm beabstandet ist. Auch der Abstand der Lichtmodulatoren 12 und 14 von den entsprechenden Seiten des Farbteilerwürfels 9 beträgt 2,00 mm.

Die in Fig. 1 gezeigte Optikeinrichtung 7 ist eine katadioptrische Optik (sie enthält abbildende Spiegel und Linsen), die einerseits eine 1:1-Abbildung des leuchtenden Feldes 3 auf die LCD-Module 12 bis 14 und andererseits eine 1:1-Abbildung der LCD-Module 12 bis 14 in die Zwischenbildebene ZE durchführt. Der Durchmesser der Plankonvexlinse 19 ist mindestens so groß gewählt wie die Summe der Kantenlänge des Polarisationsteilerwürfels 4 und der Kantenlänge des Farbteilerwürfels 7, so daß die Plankonvexlinse 19 bei den angegebenen Abbildungen jeweils zweimal durchlaufen wird. Natürlich kann die Plankonvexlinse 19 durch zwei Plankonvexlinsen (nicht gezeigt) mit kleineren Durchmessern ersetzt werden.

Auf den LCD-Modulen 12 bis 14 werden ein rotes, ein grünes und ein blaues Farbteilbild wie folgt eingestellt. Das vom leuchtenden Feld 2 ausgehende Licht (bevorzugt weißes Licht) trifft auf die Polarisationsteilerschicht 5 des Polarisationsteilerwürfels 4, die das senkrecht zur Zeichenebene linear polarisierte Licht zur Optikeinrichtung 7 lenkt, die dann dieses Licht zur Farbbilderzeugungseinheit 8 weiterleitet. In dem Farbteilerwürfel 9 wird dieses Licht in seinen roten, grünen und blauen Farbanteil dadurch aufgeteilt, daß die erste Farbteilerschicht 10 blaues Licht reflektiert und auf das LCD-Modul 14 lenkt. Die restlichen Farbanteile gehen durch die erste Farbteilerschicht 10 hindurch. Die zweite Farbteilerschicht 11 reflektiert rotes Licht, so daß dieses auf das LCD-Modul 12 gerichtet wird, und läßt die restlichen Farbanteile durch, so daß grünes Licht auf das LCD-Modul 13 gelangt.

Die LCD-Module 12 bis 14 sind jeweils gleich aufgebaut und weisen einen rechteckigen bildgebenden Bereich von z.B. 18,5 mm x 13,9 mm oder 26,4 mm x 19,8 mm mit einer Mehrzahl von in Zeilen und Spalten angeordneten Bildpixeln auf, die voneinander unabhängig mittels der Ansteuereinheit 15 angesteuert werden können, wobei zumindest zwei unterschiedliche Zustände für jedes Bildpixel einstellbar sind. In einem ersten Zustand wird das auf das entsprechende Bildpixel einfallende Licht reflektiert, ohne daß seine Polarisationsrichtung verändert wird, während im zweiten Zustand die Polarisationsrichtung des reflektierten Lichts gegenüber der Polarisation des einfallenden Lichts um 90° gedreht wird.

Um ein Bildpixel als hellen Bildpunkt zu schalten, wird daher der zweite Zustand eingestellt, bei dem die Polarisation um 90° gedreht wird, so daß dieses reflektierte Licht eine p-Polarisation aufweist. Wenn das Bildpixel als dunkler Bildpunkt geschaltet werden soll, wird es in den ersten Zustand gesetzt, in dem es das Licht zwar reflektiert, aber nicht seine Polarisation ändert. Dadurch wird auf den LCD-Modulen (bzw. den bildgebenden Bereichen) jeweils ein polarisationsmoduliertes Farbteilbild eingestellt. Diese polarisationsmodulierten Farbteilbilder werden durch den Farbteilerwürfel 9 dann mittels der Optikeinrichtung 7 in die Zwischenbildebene ZE abgebildet, wobei das Licht dabei noch durch den Polarisationsteilerwürfel 4 hindurchläuft, der jetzt als Analysator wirkt und nur Licht mit einer p-Polarisation hindurchläßt und das s-polarisierte Licht zur Lichtquelle 1 hin wegreflektiert, so daß in die Zwischenbildebene ZE nur das Licht der hell geschalteten Bildpixel abgebildet wird.

Das so in die Zwischenbildebene ZE abgebildete Zwischenbild wird dann mittels der Projektionsoptik 16 auf die Projektionsfläche 17 projiziert.

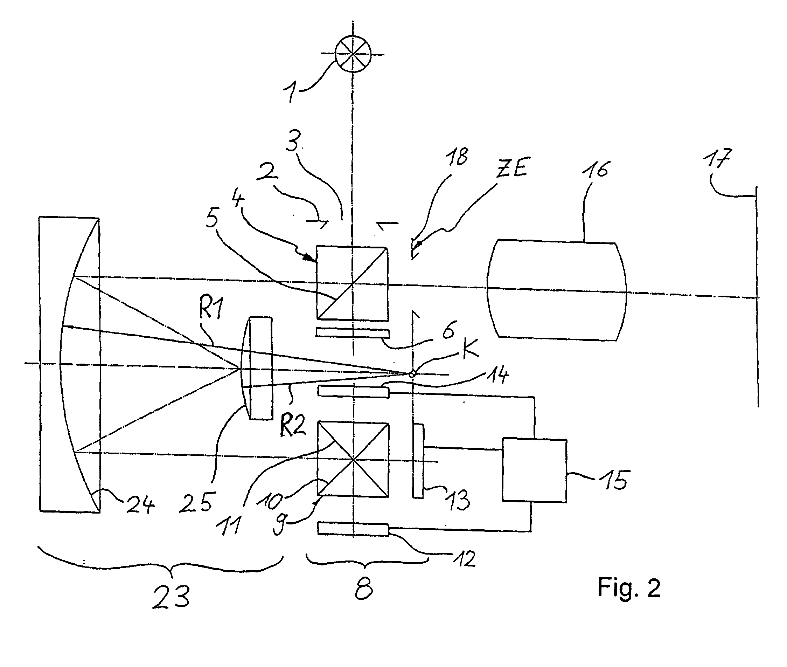

In Fig. 2 ist eine weitere Ausführungsform der erfindungsgemäßen Anordnung zum Projizieren des Bildes auf einer Projektionsfläche gezeigt, wobei sich diese Anordnung von der in Fig. 1 gezeigten dadurch unterscheidet, daß statt der Optikeinrichtung 7 eine Optikeinrichtung 23 vorgesehen ist. Die restlichen Elemente entsprechen denen von Fig. 1 und sind mit den gleichen Bezugszeichen bezeichnet. Zur Beschreibung dieser Elemente wird auf die entsprechende Beschreibung zu Fig. 1 verwiesen.

Die Optikeinrichtung 23 umfaßt einen ersten und einen zweiten sphärischen Spiegel 24 und 25, die so angeordnet sind, daß sie eine gemeinsame optische Achse aufweisen und daß ihre Krümmungsmittelpunkte in einem Punkt K zusammenfallen, der in der Zwischenbildebene ZE liegt, wobei der erste Spiegel 24 konkav und der zweite Spiegel 25 konvex ist. Die Spiegel 24 und 25 sind so angeordnet, daß das vom Polarisationsteilerwürfel 4 kommende Licht auf den ersten Spiegel 24 trifft, von diesem zum zweiten Spiegel 25 reflektiert wird, der wiederum das Licht zum ersten Spiegel 24 zurückreflektiert, von dem es dann zur Farbbilderzeugungseinheit 8 gelenkt wird (der Strahlverlauf in der Optikeinrichtung ist somit W-förmig).

Die Krümmungsradien R1 und R2 der beiden Spiegel 24 und 25 sind so gewählt, daß der Krümmungsradius R1 des ersten Spiegels 24 doppelt so groß ist wie der Krümmungsradius R2 des zweiten Spiegels 25. Die Optikeinrichtung 23 umfaßt somit nur zwei Spiegel 24 und 25, wodurch ein aus nur zwei Komponenten aufgebautes 1:1-Abbildungssystem mit einem mehrfach gefalteten Strahlengang bereitgestellt wird, mit dem eine sehr kompakte und dennoch lichtstarke Projektionsanordnung verwirklicht werden kann.

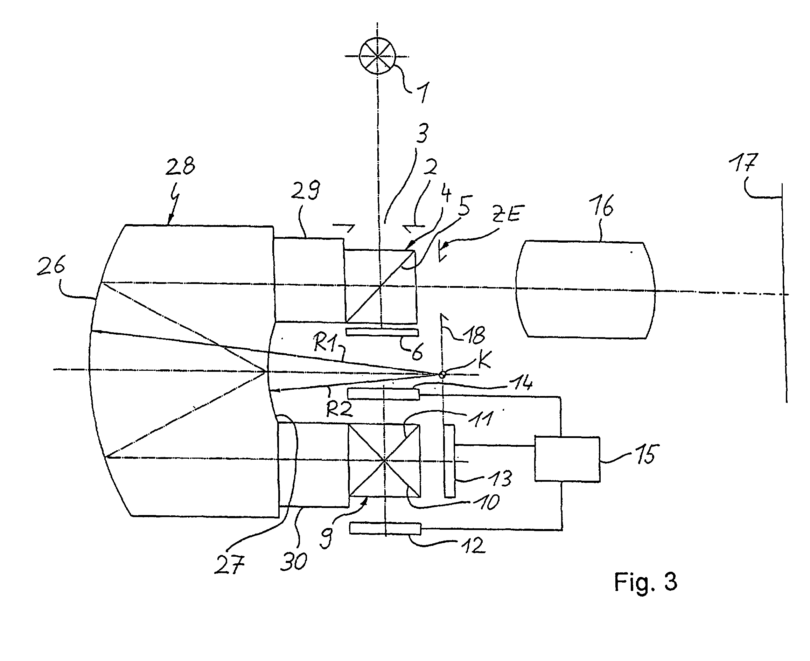

In Fig. 3 ist eine Weiterbildung der in Fig. 2 gezeigten Projektionsanordnung dargestellt, bei der die beiden Spiegel durch entsprechend gekrümmte und verspiegelte Grenzflächen 26, 27 eines Glasblocks 28 verwirklicht sind. Ferner sind noch im Unterschied zu der in Fig. 2 gezeigten Ausführungsform ein erster Glasadapter 29, der den Polarisationsteilerwürfel 4 mit dem Glasblock 28 optisch koppelt, und ein zweiter Glasadapter 30, der den Farbteilerwürfel 9 mit dem Glasblock 28 optisch koppelt, vorgesehen. Bevorzugt sind die Glasadapter 29 und 30 mit dem Glasblock 28, dem Polarisationsteilerwürfel 4 und dem Farbteilerwürfel 9 verkittet, sie können jedoch auch angesprengt sein.

Ein weiterer Vorteil der Verwendung des Glasblocks 28 und auch der Glasadapter 29, 30, falls sie vorgesehen sind, besteht darin, daß der Öffnungswinkel des Strahlbündels in den Glaskörpern geringer als in Luft ist, so daß das gesamte System kompakter ausgebildet werden kann.

Vorteilhaft ist bei dieser Ausführungsform, daß im Vergleich zu einer Anordnung ohne Glasadapter 29 und 30 die Anzahl der Glas-Luft-Grenzflächen, die verschmutzungsanfällig sind, reduziert ist. Des weiteren sind die Spiegel durch die verspiegelten Grenzflächen 26 und 27 gebildet, wodurch diese Spiegelflächen keine Grenzfläche zur Luft aufweisen und somit auch nicht verschmutzen können. Natürlich kann die in Fig. 3 gezeigte Ausführungsform auch ohne die Glasadapter 29 und 30 verwirklicht werden.

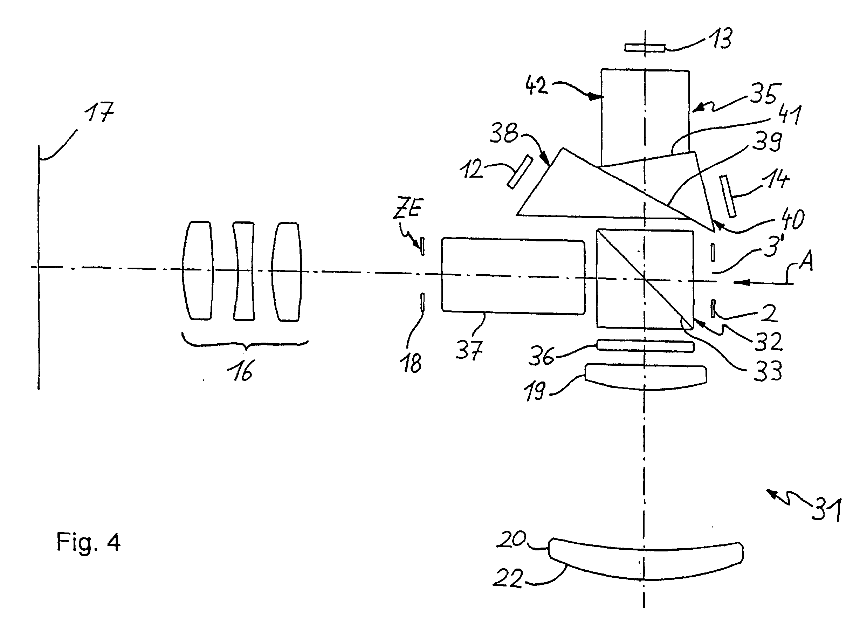

In Fig. 4 ist eine weitere Ausführungsform der erfindungsgemäßen Projektionsanordnung gezeigt, bei der im Unterschied zu den bisher beschriebenen Ausführungsformen die Optikeinrichtung 31 nicht das leuchtende Feld 3' auf die LCD-Module 12 bis 14 abbildet, sondern nur die bildgebenden Bereiche der LCD-Module 12 bis 14 in die Zwischenbildebene ZE abbildet, so daß die Optikeinrichtung 31 hier nur einmal durchlaufen wird.

Bei der in Fig. 4 gezeigten Ausführungsform wird die Blende 2 mit linear polarisiertem Licht (Pfeil A) beaufschlagt, so daß das leuchtende Feld 3 mit schon polarisiertem Licht gebildet wird, das auf einen Polarisationsteilerwürfel 32 mit einer Polarisationsteilerschicht 33 trifft, an der es, in Fig. 4 gesehen, nach oben umgelenkt wird und auf eine Farbbilderzeugungseinheit 34 trifft, bei der eine Prismenanordnung 35 zur Farbaufteilung des einfallenden Lichts in seinen roten, grünen und blauen Anteil vorgesehen ist. Dieses Licht trifft auf die LCD-Module 12 bis 14 und wird durch diese polarisationsmoduliert, wodurch polarisationsmodulierte Farbteilbilder auf den LCD-Modulen 12 bis 14 eingestellt werden, und das modulierte Licht wird zurück zur Prismenanordnung reflektiert. Dieses modulierte Licht wird mittels der Prismenanordnung 35 überlagert, so daß ein gemeinsames polarisationsmoduliertes Strahlenbündel, das die Farbinformationen des gewünschten Farbbilds enthält, auf die Polarisationsteilerschicht 33 des Polarisationsteilerwürfels 32 trifft, an der die dunkel geschalteten Bildpixel zur Blende 2 hin wegreflektiert werden, während das Licht der hell geschalteten Bildpixel durch die Polarisationsteilerschicht 33 hindurchgeht.

Dem Polarisationsteilerwürfel 32 ist ein Retarder 36 nachgeschaltet, der die lineare Polarisation des auf ihn treffenden Lichtes in zirkulare Polarisation konvertiert (bei nochmaligem Durchgang dieses zirkular polarisierten Lichtes durch den Retarder erfolgt eine Konvertierung der zirkularen Polarisation in lineare Polarisation, wobei die Polarisationsrichtung jetzt um 90° gegenüber der linearen Polarisationsrichtung des ursprünglich auf den Retarder treffenden Lichtes gedreht ist), und dem Retarder 36 ist die Optikeinrichtung 31 nachgeschaltet, die identisch zu der in Fig. 1 gezeigten Optikeinrichtung 7 gebildet ist.

Das durch den Retarder 36 hindurchgehende Licht tritt somit durch die Plankonvexlinse 19 hindurch, trifft auf die Meniskuslinse 20 und wird an der Verspiegelungsschicht 22 reflektiert, wodurch es wiederum durch die Meniskuslinse 20, die Plankonvexlinse 19 und den Retarder 36 läuft. Da das von den LCD-Modulen 12 bis 14 reflektierte Licht der hell geschalteten Bildpixel zweimal durch den Retarder 36 hindurchläuft, wird dadurch die Polarisationsrichtung dieses Lichtes um 90° gedreht, so daß es an der Polarisationsteilerschicht 33 des Polarisationsteilerwürfels 32, in Fig. 4 gesehen, nach links reflektiert wird und in einen Glasquader 37 eintritt, der dazu vorgesehen ist, daß die optische Weglänge von den LCD-Modulen 12 bis 14 bis zur Verspiegelungsschicht 22 der Optikeinrichtung 31 gleich zur optischen Weglänge von der Verspiegelungsschicht 22 bis zur Zwischenbildebene ZE ist. In der Zwischenbildebene ZE ist wiederum eine Blende 18 angeordnet, die das abgebildete Zwischenbild seitlich begrenzt. Der Zwischenbildebene ZE ist die Projektionsoptik 16 nachgeschaltet, die das Zwischenbild auf die Projektionsfläche 17 projiziert.

Die Farbaufteilung und -zusammenführung in der Prismenanordnung 35 findet wie folgt statt. Das polarisierte Licht tritt in ein erstes Prisma 38 ein, wobei der blaue Lichtanteil an einer auf einer dem Polarisationsteilerwürfel abgewandten Seite des Prismas 38 aufgebrachten Beschichtung 39 reflektiert und im Prisma 38 mittels Totalreflexion (an der Grenzfläche des Prismas 38 zum Polarisationsteiler 32) auf das LCD-Modul 12 gelenkt wird. Das restliche Licht tritt durch die Schicht 39 hindurch in ein zweites Prisma 40 ein, das durch einen Luftspalt (nicht gezeigt) von dem ersten Prisma 38 getrennt ist, wobei der rote Lichtanteil an einer Beschichtungsschicht 41 reflektiert wird, die auf einer dem ersten Prisma 38 abgewandten Seite des zweiten Prismas 40 vorgesehen ist. Das rote Licht wird dann mittels Totalreflexion im Prisma 40 auf das LCD-Modul 14 gelenkt. Das restliche Licht und somit das grüne Licht geht durch die Schicht 41 hindurch und tritt in ein drittes Prisma 42 ein, läuft durch dieses hindurch und trifft dann auf das LCD-Modul 13. An den LCD-Modulen 12 bis 14 wird das Licht polarisationsmoduliert und dabei reflektiert, so daß auf ihnen die entsprechenden Farbteilbilder erzeugt werden. Das reflektierte Licht läuft in entsprechender Weise durch die Prismenanordnung 35 hindurch und wird dadurch zu einem gemeinsamen Lichtbündel kombiniert, das dann auf die Polarisationsteilerschicht 33 trifft, durch die das Licht der dunkel geschalteten Bildpixel weg reflektiert wird. Das Licht der hell geschalteten Bildpixel tritt durch die Polarisationsteilerschicht 33 und wird mittels der Optikeinrichtung in die Zwischenbildebene in der beschriebenen Art und Weise abgebildet.

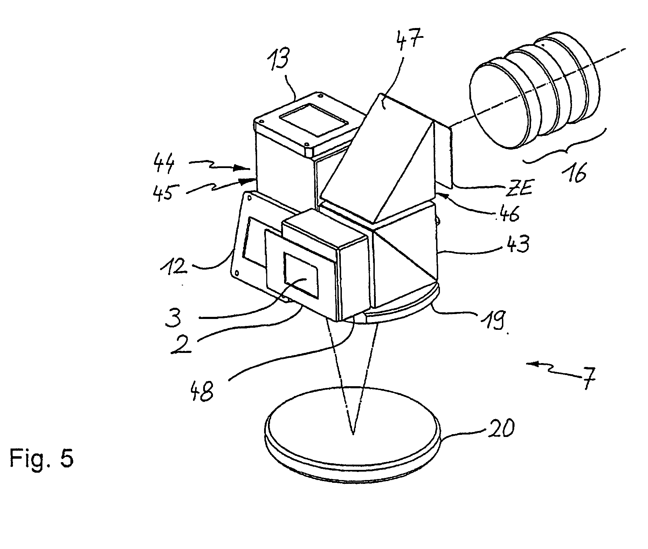

In Fig. 5 ist eine weitere Ausführungsform der erfindungsgemäßen Anordnung perspektivisch dargestellt. Bei dieser Ausführungsform ist die Optikeinrichtung 7 und die Anordnung des Polarisationsteilerwürfels 43 und der Farbbilderzeugungseinheit 44 gleich zu der in Fig. 1 gezeigten Ausführungsform, wobei anstatt eines Farbteilerwürfels eine Prismenanordnung 45 vorgesehen ist, die der in Fig. 4 gezeigten Prismenanordnung 35 entspricht. Im Unterschied zu der in Fig. 1 gezeigten Anordnung ist zwischen dem Polarisationsteilerwürfel 43 und der Zwischenbildebene ZE ein Umlenkprisma 46 angeordnet, das den Strahlverlauf um 90° umlenkt, wobei die Seite 47 des Prismas 46, an der die Umlenkung stattfindet, verspiegelt sein kann. Bevorzugt wird aber die totale innere Reflexion (Totalreflexion) ausgenutzt, wobei in diesem Fall die Fläche 47 nicht verspiegelt ist. Ferner ist noch zwischen der Blende 2 und dem Polarisationsteilerwürfel 43 ein Glasblock 48 angeordnet, dessen Abmessungen so gewählt sind, daß der Glasweg vom leuchtenden Feld 3 bis zu den LCD-Modulen 12 bis 14 gleich dem Glasweg von den LCD-Modulen 12 bis 14 bis zur Zwischenbildebene ZE ist. Bei der in Fig. 5 gezeigten Anordnung bildet die Optikeinrichtung 7 sowohl das leuchtende Feld 3 auf die bildgebenden Bereiche der LCD-Module 12 bis 14, als auch die bildgebenden Bereiche der LCD-Module 12 bis 14 in die Zwischenbildebene ZE ab. Die Wirkungsweise ist daher identisch zu der in Fig. 1 gezeigten Ausführungsform, wobei bei der in Fig. 5 gezeigten Ausführungsform durch die Umlenkung mittels des Umlenkungsprismas 46 eine sehr kompakte Anordnung verwirklicht werden kann. Natürlich kann jedes andere optische Element, mit dem in gleicher Weise eine Umlenkung verwirklicht werden kann, statt dem Umlenkprisma 46 eingesetzt werden.

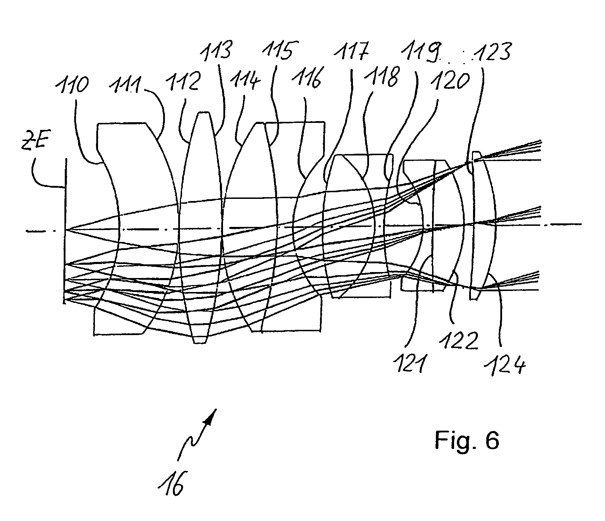

In Fig. 6 ist ein möglicher Aufbau der Projektionsoptik 16 gezeigt. Eine Projektionsoptik 16 mit einem solchen Aufbau kann in jeder der vorher beschriebenen Ausführungsformen eingesetzt werden. In der nachfolgenden Tabelle 2 sind die entsprechenden Linsendaten angegeben, wobei der Brechungsindex und die Abbesche Zahl hier für die Wellenlänge 587,6 nm aufgeführt sind.

**Tabelle 2**

| Flächennummer | Krümmungsradius (mm) | zwischen den Flächen | Abstand (mm) | Brechungsindex | Abbesche Zahl |
|---|---|---|---|---|---|
| 110 | 34,478 | ZE-110 | 12,18 | | |
| 111 | 39,999 | 110-111 | 14,00 | 1,803181 | 46,3799 |
| 112 | -90,065 | 111-112 | 0,10 | | |
| 113 | 103,131 | 112-113 | 10,00 | 1,803181 | 46,3799 |
| 114 | -42.048 | 113-114 | 0,10 | | |
| 115 | 83,089 | 114-115 | 13,00 | 1,617999 | 63,3335 |
| 116 | -22,786 | 115-116 | 3,60 | 1,558361 | 54,1572 |
| 117 | -53,434 | 116-117 | 6,80 | | |
| 118 | 21,066 | 117-118 | 12,00 | 1,617999 | 63,3335 |
| 119 | -50,036 | 118-119 | 2,20 | 1,620040 | 36,3665 |
| 120 | 18,361 | 119-120 | 8,85 | | |
| 121 | -342,75 | 120-121 | 2,20 | 1,717359 | 29,5128 |
| 122 | 27,12 | 121-122 | 7,00 | 1,617999 | 63,3335 |
| 123 | 202,45 | 122-123 | 2,20 | | |
| 124 | 37,417 | 123-124 | 5,00 | 1,850254 | 32,1699 |

## Patentansprüche

1. Anordnung zum Projizieren eines mehrfarbigen Bildes auf eine Projektionsfläche (17), mit einer Lichtquelle (1), die mehrfarbiges Licht abgibt, einer Farbeinheit (9; 35), einem ersten und einem zweiten der Farbeinheit (9; 35) nachgeschalteten Lichtmodulator (12; 13; 14) und einer Projektionsoptik (16), wobei die Farbeinheit (9, 35) mit Licht der Lichtquelle (1) beaufschlagbar ist und davon Licht einer ersten Farbe auskoppelt und auf den ersten Lichtmodulator (12) lenkt sowie Licht einer zweiten Farbe auskoppelt und auf den zweiten Lichtmodulator (13) lenkt, wobei die Lichtmodulatoren (12; 13; 14) das auf sie fallende Licht modulieren, um jeweils ein Farbteilbild des mehrfarbigen Bildes zu erzeugen, und wobei das modulierte Licht mittels der Farbeinheit (9; 35) zu einem gemeinsamen Strahlenbündel überlagert wird, mit dem die Projektionsoptik (16) beaufschlagt wird, **dadurch gekennzeichnet, daß** zwischen der Farbeinheit (9; 35) und der Projektionsoptik (16) eine mit dem gemeinsamen Strahlenbündel beaufschlagbare Optikeinrichtung (7; 23; 28; 31) mit einem gekrümmten Spiegel (21; 24; 26) angeordnet ist, wobei die Optikeinrichtung (7; 23; 28; 31) in einer der Projektionsoptik (16) vorgeschalteten Zwischenbildebene (ZE) ein mehrfarbiges Zwischenbild erzeugt, das von der Projektionsoptik (16) als das mehrfarbige Bild auf die Projektionsfläche (17) projiziert wird.

2. Anordnung nach Anspruch 1, **dadurch gekennzeichnet, daß** die Optikeinrichtung (8; 23; 28; 31) eine 1:1-Abbildungsoptik ist.

3. Anordnung nach Anspruch 1, **dadurch gekennzeichnet, daß** die Optikeinrichtung als Verkleinerungsoptik ausgelegt ist.

4. Anordnung nach einem der Ansprüche 1 bis 3, **dadurch gekennzeichnet, daß** die Optikeinrichtung (7; 23; 28; 31) bezüglich des Spiegel (21; 24; 26) symmetrisch ausgebildet ist.

5. Anordnung nach einem der Ansprüche 1 bis 4, **dadurch gekennzeichnet, daß** der Spiegel (21; 24; 26) der Optikeinrichtung (7; 23; 28; 31) eine sphärische Krümmung aufweist.

6. Anordnung nach einem der Ansprüche 1 bis 5, **dadurch gekennzeichnet, daß** die Optikeinrichtung (7;30) eine katadioptrische Optik ist.

7. Anordnung nach einem der Ansprüche 1 bis 6, **dadurch gekennzeichnet, daß** der Spiegel (21; 26) der Optikeinrichtung als eine reflektierende Beschichtung auf einer gekrümmten und der Farbeinheit (9; 35) abgewandten Grenzfläche eines transparenten Optikelements (28) der Optikeinrichtung ausgebildet ist.

8. Anordnung nach einem der Ansprüche 1 bis 7, **dadurch gekennzeichnet, daß** die Anordnung noch einen dritten der Farbeinheit (9; 35) nachgeschalteten Lichtmodulator (14) aufweist, wobei die Farbeinheit (9; 35) Licht einer dritten Farbe aus dem Licht, mit dem sie beaufschlagt wird, auskoppelt und auf den dritten Lichtmodulator (14) lenkt, der das auf ihn fallende Licht moduliert, um ein drittes Farbteilbild des mehrfarbigen Bildes einzustellen, und wobei das modulierte Licht der drei Lichtmodulatoren (12; 13; 14) mittels der Farbeinheit (9, 35) zum gemeinsamen Strahlenbündel überlagert wird.

9. Anordnung nach Anspruch 8, **dadurch gekennzeichnet, daß** mit dem ersten Lichtmodulator (12) ein rotes Farbteilbild, mit dem zweiten Lichtmodulator (13) ein grünes Farbteilbild und mit dem dritten Lichtmodulator (14) ein blaues Farbteilbild einstellbar ist.

10. Anordnung nach einem der Ansprüche 1 bis 9, **dadurch gekennzeichnet, daß** die Lichtmodulatoren (12; 13; 14) den Polarisationszustand des auf sie fallenden Lichtes modulieren und daß ein der Zwischenbildebene (ZE) vorgeschalteter Analysator (4; 32) vorgesehen ist, der bewirkt, daß nur moduliertes Licht mit einem vorbestimmten Polarisationszustand in die Zwischenbildebene (ZE) gelangt.

11. Anordnung nach Anspruch 10, **dadurch gekennzeichnet, daß** der Analysator (4; 23) zwischen der Zwischenbildebene (ZE) und der Optikeinrichtung angeordnet ist.

12. Anordnung nach einem der Ansprüche 1 bis 11, **dadurch gekennzeichnet, daß** die Optikeinrichtung eine Plankonvexlinse (18) und eine verspiegelte Meniskuslinse (19) umfaßt.

13. Anordnung nach einem der Ansprüche 1 bis 11, **dadurch gekennzeichnet, daß** die Optikeinrichtung einen Konkavspiegel und einen Konvexspiegel aufweist.

14. Anordnung nach Anspruch 13, **dadurch gekennzeichnet, daß** der Konkav- und Konvexspiegel durch verspiegelte Außenflächen eines Glaskörpers verwirklicht sind.

15. Anordnung nach einem der Ansprüche 1 bis 14, **dadurch gekennzeichnet, daß** die Lichtmodulatoren (12; 13; 14) reflektive Lichtmodulatoren sind.

16. Anordnung nach Anspruch 15, **dadurch gekennzeichnet, daß** die Optikeinrichtung (7; 23; 31) ein mit Licht der Lichtquelle (1) gebildetes leuchtendes Feld (2) auf die Lichtmodulatoren (12, 13, 14) abbildet.

## Claims

1. Arrangement for projecting a multi-colored picture onto a projection screen (17), said arrangement comprising a light source (1) that emits multi-colored light, a color unit (9; 35), a first and a second light modulator (12; 13; 14) arranged following the color unit (9; 35), and projection optics (16), wherein the color unit (9, 35) can be illuminated with light from the light source (1) and from that separates light of a first color and directs it on the first light modulator (12), and separates light of a second color and directs it on the second light modulator (13), wherein the light modulators (12; 13; 14) modulate the lights shining on them, in order to generate one partial color image each of the multi-colored picture, and wherein the modulated light is superimposed to form a common beam, by means of the color unit (9; 35), with which beam the projection optics (16) is illuminated, **characterized in that** an optical device (7; 23; 28; 31) which can be illuminated with the common beam and having a curved mirror (21; 24; 26) is arranged between the color unit (9; 35) and the projection optics (16), said optical device (7; 23; 28; 31) generating a multi-colored intermediate image in an intermediate image level (ZE) arranged in front of the projection optics (16), wherein the multi-colored intermediate image is projected by the projection optics (16) onto the projection surface (17) as the multi-colored picture.

2. Arrangement according to claim 1, **characterized in that** the optical device (8; 23; 28; 31) is a 1:1 image optics.

3. Arrangement according to claim 1, **characterized in that** the optical device is provided as a reduction optics.

4. Arrangement according to one of claims 1 through 3, **characterized in that** the optical device (7; 23; 28; 31) is provided symmetrically with respect to the mirror (21; 24; 26).

5. Arrangement according to one of claims 1 to 4, **characterized in that** the mirror (21; 24; 26) of the optical device (7; 23; 28; 31) has a spherical curvature.

6. Arrangement according to one of claims 1 to 5, **characterized in that** the optical device (7; 30) is a catadioptrics optics.

7. Arrangement according to one of claims 1 to 6, **characterized in that** the mirror (21; 26) of the optical device is a reflective coating on a curved boundary surface of a transparent optical element (28) turned away from the color unit (9; 35).

8. Arrangement according to one of claims 1 to 7, **characterized in that** the arrangement also comprises a third light modulator (14) arranged following the color unit (9; 35), wherein the color unit (9; 35) separates light of a third color from the light with which it is illuminated, and directs it on the third light modulator (14) that modulates the light incident thereon, in order to set a third partial color image of the mufti-colored picture, and wherein the modulated light of the three light modulators (12; 13; 14) is superimposed by means of the color unit (9; 35) to generate a common beam.

9. Arrangement according to claim 8, **characterized in that** a red partial color image may be set with the first light modulator (12), a green partial color image may be set with the second light modulator (13), and a blue partial color image may be set with the third light modulator (14).

10. Arrangement according to one of claims 1 to 9, **characterized in that** the light modulators (12; 13; 14) modulate the state of polarization of the light incident on them, and that an analyzer (4; 32) arranged in front of the intermediate image level (ZE) is provided which causes only light modulated with a pre-determined state of polarization to be received in the intermediate image level (ZE).

11. Arrangement according to claim 10, **characterized in that** the analyzer (4; 23) is provided between the intermediate image level (ZE) and the optical device.

12. Arrangement according to one of claims 1 to 11, **characterized in that** the optical device comprises a piano-convex lens (18) and a meniscus lens (19) provided with a reflective coating.

13. Arrangement according to one of claims 1 to 11, **characterized in that** the optical device comprises a concave mirror and a convex mirror.

14. Arrangement according to claim 13, **characterized in that** the concave and the convex mirrors are realized by the reflectively coated outer surfaces of a glass object.

15. Arrangement according to one of claims 1 to 14, **characterized in that** the light modulators (12; 13; 14) are reflective light modulators.

16. Arrangement according to claim 15, **characterized in that** the optical device (7; 23; 31) images a field of illumination (2) generated with light from the light source (1) onto the light modulators (12, 13, 14).

## Revendications

1. Système pour projeter une image polychrome sur une surface de projection (17), comprenant une source de lumière (1) qui donne de la lumière polychrome, une unité de couleur (9 ; 35), un premier et un deuxième modulateurs de lumière (12 ; 13 ; 14) installés en aval de l'unité de couleur (9 ; 35) et une optique de projection (16), l'unité de couleur (9 ; 35) pouvant être alimentée en lumière de la source de lumière (1) et en extrayant de la lumière d'une première couleur et la dirigeant sur le premier modulateur de lumière (12), ainsi qu'extrayant de la lumière d'une seconde couleur et la dirigeant sur le deuxième modulateur de lumière (13), les modulateurs de lumière (12 ; 13 ; 14) modulant la lumière qui leur est incidente afin de produire respectivement une image partielle de couleur de l'image polychrome, et la lumière modulée étant superposée en un faisceau de rayons commun au moyen de l'unité de couleur (9 ; 35), avec lequel l'optique de projection (16) peut être alimentée, **caractérisé en ce qu'**un dispositif d'optique (7; 23 ; 28 ; 31) pouvant être alimenté par le faisceau de rayons commun, doté d'un miroir curviligne (21 ; 24 ; 26), est disposé entre l'unité de couleur (9 ; 35) et l'optique de projection (16), le dispositif d'optique (7 ; 23 ; 28 ; 31) générant une image intermédiaire polychrome dans un plan d'image intermédiaire (ZE) en amont de l'optique de projection (16), cette image intermédiaire étant projetée par l'optique de projection (16) sur la surface de projection (17) comme image polychrome.

2. Système selon la revendication 1, **caractérisé en ce que** le dispositif d'optique (8 ; 23 ; 28 ; 31) est une optique de reproduction 1:1.

3. Système selon la revendication 1, **caractérisé en ce que** le dispositif d'optique est exécuté comme optique de réduction.

4. Système selon l'une quelconque des revendications 1 à 3, **caractérisé en ce que** le dispositif d'optique (7 ; 23 ; 28 ; 31) est formé de manière symétrique en ce qui concerne le miroir (21 ; 24 ; 26).

5. Système selon l'une quelconque des revendications 1 à 4, **caractérisé en ce que** le miroir (21 ; 24 ; 26) du dispositif d'optique (7 ; 23 ; 28 ; 31) présente une courbure sphérique.

6. Système selon l'une quelconque des revendications 1 à 5, **caractérisé en ce que** le dispositif optique (7 ; 30) est une optique catadioptrique.

7. Système selon l'une quelconque des revendications 1 à 6, **caractérisé en ce que** le miroir (21 ; 26) du dispositif d'optique est exécuté comme une couche réfléchissant sur une surface limite, convexe et détournée de l'unité de couleur (9 ;35), d'un élément d'optique (28) transparent du dispositif d'optique.

8. Système selon l'une quelconque des revendications 1 à 7, **caractérisé en ce que** le système présente encore un troisième modulateur de lumière (14) installé en aval de l'unité de couleur (9 ; 35), l'unité de couleur (9 ; 35) extrayant de la lumière d'une troisième couleur à partir de la lumière avec laquelle elle est alimentée, et la dirigeant sur le troisième modulateur de lumière (14) qui module la lumière qui lui est incidente afin de régler une troisième image partielle de couleur de l'image polychrome, et la lumière modulée des trois modulateurs de lumière (12 ; 13 ; 14) étant superposée en un faisceau de rayons commun au moyen de l'unité de couleur (9 ; 35).

9. Système selon la revendication 8, **caractérisé en ce qu'**une image partielle de couleur rouge est réglable avec le premier modulateur de lumière (12), une image partielle de couleur verte avec le deuxième modulateur de lumière (13) et une image partielle de couleur bleue avec le troisième modulateur de lumière (14).

10. Système selon l'une quelconque des revendications 1 à 9, **caractérisé en ce que** les modulateurs de lumière (12 ; 13 ; 14) modulent l'état de polarisation de la lumière qui leur est incidente et **en ce qu'**un analyseur (4 ; 32) en aval du plan de l'image intermédiaire (ZE) est prévu, cet analyseur ayant pour effet que seulement de la lumière modulée arrive dans le plan de l'image intermédiaire (ZE) avec un état de polarisation prédéterminé.

11. Système selon la revendication 10, **caractérisé en ce que** l'analyseur (4 ; 23) est placé entre le plan d'image intermédiaire (ZE) et le dispositif d'optique.

12. Système selon l'une quelconque des revendications 1 à 11, **caractérisé en ce que** le dispositif d'optique comprend une lentille plane-convexe (18) et une lentille ménisque argentée (18).

13. Système selon l'une quelconque des revendications 1 à 11, **caractérisé en ce que** le dispositif optique présente un miroir concave et un miroir convexe.

14. Système selon la revendication 13, **caractérisé en ce que** le miroir concave et le miroir convexe sont réalisés par des surfaces extérieures argentées d'un corps en verre.

15. Système selon l'une quelconque des revendications 1 à 14, **caractérisé en ce que** les modulateurs de lumière (12 ; 13 ; 14) sont des modulateurs de lumières réflectifs.

16. Système selon la revendication 15, **caractérisé en ce que** le dispositif d'optique (7 ; 23 ; 31) reproduit un champ (2) lumineux formé par la lumière de la source de lumière (1) sur les modulateurs de lumière (12 ; 13 ; 14).
